# EUROPÄISCHE PATENTSCHRIFT

(11) **EP 0 704 049 B1**
(45) Veröffentlichungstag und Bekanntmachung des Hinweises auf die Patenterteilung: **11.02.1998**
(21) Anmeldenummer: 95913893.4
(22) Anmeldetag: 31.03.1995
(51) Int. Cl.: G01F 23/74

(54) **SCHWIMMERGESTEUERTER NIVEAU-SCHALTER MIT VERSTELLBAREN SCHALTPUNKTEN**
FLOAT-CONTROLLED LEVEL SWITCH WITH ADJUSTABLE SWITCHING POINTS
INTERRUPTEUR A NIVEAU COMMANDE PAR FLOTTEUR A POINTS DE COMMUTATION AJUSTABLES

(30) Priorität: 16.04.1994 DE 4413311
(43) Veröffentlichungstag der Anmeldung: 03.04.1996
(73) Patentinhaber: JACOB ELEKTRONISCHE MESS- UND REGELGERÄTE GmbH, 71394 Kernen im Remstal (DE); STEREMAT FÜLLSTANDS- UND MSR-GERÄTE GmbH & CO. KG, 10407 Berlin (DE)
(72) Erfinder: WILL, Jürgen, D-10365 Berlin (DE); KRÜGER, Günther, D-71554 Weissach im Tal (DE)
(74) Vertreter: Wolff, Michael, Dipl.-Phys.
(86) Internationale Anmeldenummer: EP9501210
(87) Internationale Veröffentlichungsnummer: WO9528622

(56) Entgegenhaltungen:
- EP-A- 0 477 034
- DE-A- 1 690 197
- DE-A- 2 536 843
- DE-A- 2 702 736
- DE-U- 7 102 291

## Beschreibung

Die Erfindung betrifft einen schwimmergesteuerten Niveau-Schalter mit elektrischen und/oder elektronischen Schaltelementen, von denen im Falle der DE 25 36 843 B2 nur ein einziges (Reed-Schalter) vorhanden ist, welche berührungslos durch das magnetische Feld eines Schwimmermagneten betätigt ihre Zustände ändern und dabei binäre oder analoge Signale erzeugen, wobei mehrere übereinanderliegende Schaltpunkte stufenlos auf die zu regelnden Niveauhöhen der Flüssigkeit einstellbar sind, die einen Schwimmer auftreibt, der an einem Rohr geführt ist. - Die verschiedenen Schaltpunkte ermöglichen es, Pegelstände von Flüssigkeiten in ausgewählten Höhenbereichen, vor allem auch im Zusammenhang mit sich ändernden Betriebsbedingungen, stufenlos zu regeln.
Ein aus der DE-OS 1 690 197 bekannter "Magnet-Schwimmerschalter" der zuvor genannten Art vermeidet den Nachteil anderer ähnlicher Schalter, daß aufgrund baubedingter Abstände zwischen steckbaren Schalterelementen keine stufenlose Verstellung möglich ist, dadurch, daß um ein zentrales Führungsrohr (3) mehrere parallele Bolzen (9) äquidistant angeordnet sind, von denen jeder einen Magnetschalter (7) in der Nähe des einen Schaltmagneten (4) aufnehmenden Rohrs (3) trägt, welcher mittels einer darin angeordneten Stange (5) mit einem Schwimmer (6) verbunden ist, wobei jeder Schalter (7) an seinem Bolzen (9) geführt und mittels einer Schraube feststellbar ist. Das Ganze deckt eine Schutzhaube (15). Nachteilig ist an diesem bekannten schwimmergesteuerten Niveau-Schalter mit stufenlos einstellbaren Schaltpunkten, daß er einen relativ großen Durchmesser (den der Haube 15) besitzt; dazu auch noch eine um die axiale Ausdehnung der Stange (5) vergrößerte Gesamtlänge, die mit der Stangenlänge zunimmt, wobei der Schwimmer (6) mehr belastet wird und schließlich schwebt oder sinkt, falls er nicht vergrößert wird. Außerdem kann sich der Stab (5) und Schwimmer (6) wie ein Pendel aufhängende Schaltmagnet (4) im Führungsrohr (3) verkanten.
Diesen Nachteil vermeidet der erfindungsgemäße Niveau-Schalter gemäß Anspruch 1 mittels dessen kennzeichnenden Merkmalen die ihm zu einer viel schlankeren Bauform bei verminderter Gesamtlänge verhelfen.
Aus der DE-GM 7 102 291 (Fig. 1) ist es bei einer "Vorrichtung zur Bestimmung des Spiegels einer Flüssigkeit in einem geschlossenen Gefäß" lediglich bekannt, ein einziges Schaltelement (Reed-Kontakt 13) in einer rohrförmigen Hülle (1) mit schließendem Boden 815) auf diesem abzustützen und diese Hülle axial (vertikal) verschiebbar in einem rohrförmigen Mantel (11) anzuordnen, auf dem ein Schwimmer (20, mit Magnetring 21) hoch und nieder gleitet. Dabei ist das Schaltelement (13) "ortsfest, das heißt, nur zu Justierzwecken veränderbar, angeordnet", indem die Hülle (1) mittels einer Schraubmutter (4) im Mantel (11) auf- und abwärts zu verschieben ist.

Vorteilhafte Ausgestaltungen und Weiterbildungen des erfindungsgemäßen Niveau-Schalters gemäß Hauptanspruch (Nr. 1) sind in den Unteranspriichen gekennzeichnet.
Die Ausbildung der Verstellelemente gemäß Anspruch 2 als Gewindespindeln ergibt im Vergleich mit den Klemmschrauben des Schalters gemäß DE-OS 1 690 197 eine wesentlich höhere Verstellgenauigkeit.

Im folgenden ist die Erfindung anhand zweier durch die Zeichnung beispielhaft dargestellter und bevorzugter Ausführungsformen des erfindungsgemäßen schwimmergesteuerten Niveau-Schalters im einzelnen erläutert.
Sie zeigt:
- **Figur 1**:: Eine Gesamtansicht der ersten Ausführungsform "Verstellung der Schaltelemente 12 mittels Verstellspindeln 19", teilweise aufgebrochen, unterbrochen und axial geschnitten.
- **Figur 2**:: Eine vergrößerte Einzelheit Z von Fig. 1 im Quer-bzw. Längsschnitt
- **Figur 3**:: Eine vergrößerte Stirnansicht des in der Figur 2 Dargestellten (im Schnitt gezeichnet).
- **Figur 4**:: Eine vergrößerte Stirnansicht der zweiten Ausführungsform "Verstellung der Schaltelementeträger 12 ohne Verstellspindel 19" (im Schnitt gezeichnet).

In beiden Ausführungsbeispielen besteht der erfindungsgemäße Niveau-Schalter, der vertikal im Flüssigkeitsbehälter eingebaut wird, von oben nach unten gesehen, hauptsächlich aus:
- dem Klemmengehäuse 1 mit seinen Anschlußklemmen 2 und der Kabelverschraubung 3,
- dem Anschlußkopf 4 zur Befestigung des Schalters am Behälter im Beispiel mittels Flansch 5 und Gegenmutter 6,
- dem mit dem Anschlußkopf 4 druckdicht verbundenen und nach unten hin geschlossenen Gleitrohr 7,
- dem Schwimmer 8 mit dem in seinem Inneren sich befindenden Permanent-Magneten 9 und dem Stellring 10 auf dem Gleitrohr 7
- dem sich im Inneren des Gleitrohrs 7 befindenden Profilstabes 11 und den Verstellspindeln 19 mit Gewinde sowie
- den Schaltelementeträgern 12 mit entsprechendem Innengewinde.

Die den elektrischen Strom führenden Teile sind:
das Anschlußkabel 13, die Leitungen 14, die im Profilstab 11 eingesetzten Stromschienen 15, die an den Schaltelemente trägern 12 befestigten Kontaktfedern 16 und Reedschalter 17.

Zur Gewährleistung einer bistabilen Schaltfunktion der Reedschalter 17 sind daneben die Hilfsmagneten 18 angeordnet. Alle mit dem Medium in Berührung kommenden Teile des Niveau-Schalters sind aus korrosionsbeständigem Material gefertigt.

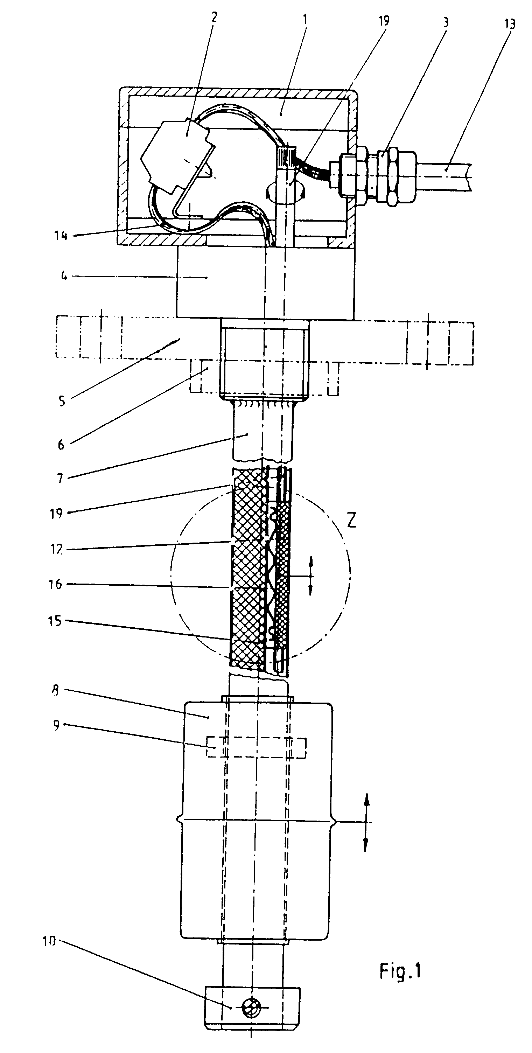

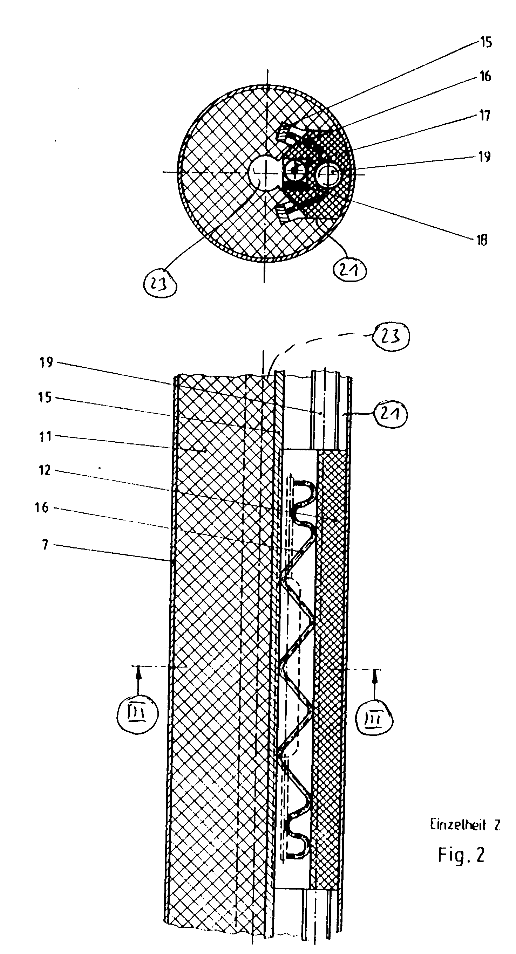

Das erste Ausführungsbeispiel, Figur 1, zeigt den Einbau des Niveau-Schalters mittels Flansch 5. Statt dessen kann auch jedes andere geeignete Verschlußteil des Behälters nach einer entsprechenden Bearbeitung dafür genutzt werden.
Nach dem Einbau des Niveau-Schalters im Behälter und nach Öffnung des Deckels des Klemmengehäuses 1 können die vorbereiteten Adern des Anschlußkabels 13 an die Anschlußklemmen 2 angeschlossen werden. Außerdem werden die Verstellspindeln 19 zugänglich, die mittels einens geeigneten Werkzeuges verdreht werden können. Entsprechend den Drehrichtungen bewegen sich die jeweils dazugehörenden Schaltelementeträger 12 und damit die Schaltpunkte des Niveau-Schalters auf- bzw. abwärts.
Nach Einstellung der Schaltpunkte werden die Verstellspindeln 19 durch das Festschrauben einer Anpreßplatte und damit auch die Schaltelementeträger 12 in ihrer Lage fixiert.
Die Schaltelementeträger 12 bewegen sich in den Führungsbahnen 21 des Profilstabes 11.
Diese Führungsbahnen 21 sind im ersten Ausführungsbeispiel, Figur 1 bis 3, hintereinander und auf dem Umfang des Profilstabes 11 um 120 Winkelgrade versetzt angeordnet.
Die Entfernungen zwischen ihnen können beliebig sein.
Der Profilstab 11 besteht aus elektrisch nichtleitendem Material, in dem auf der Höhe der Führungsbahnen 21 jeweils zwei Stromschienen 15 eingebettet sind.
Die Stromschienen 15 sind über die Leitungen 14 in Kanälen 23 mit den Anschlußklemmen 2 direkt verbunden.
Auf den Kontaktflächen 15,1 der Stromschienen 15 gleiten die Kontaktfedern 16 der Schaltelementeträger bei der Höhenverstellung dieser Kontakthälften Durch entsprechende Materialauswahl und Oberflächenbehandlung beider Kontaktelemente wird die sichere Kontaktgabe bei niedrigem übergangswiderstand gewährleistet.

Die Kontaktfedern 16 sind direkt mit den Reedschaltern 17 galvanisch verbunden.
Die Reedschalter 17 und die Hilfsmagnete 18 sind in den Hohlräumen der Schaltelementeträger 12 paarweise untergebracht und nach ihrer Einstellung mit elektrisch nichtleitender Masse vergossen.

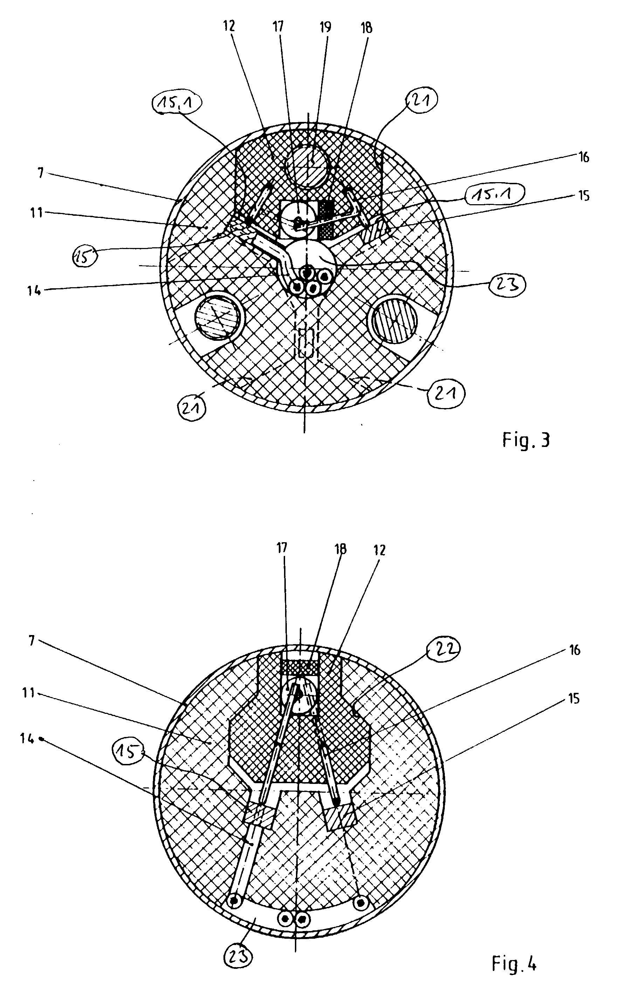

Das zweite Ausführungsbeispiel, Figur 4, zeigt die Anordnung des Profilstabes 11 und der Schaltelementeträger 12 ohne die Verstellmöglichkeit durch die Verstellspindeln 19.
In diesem Falle wird zur Verstellung der Schaltelementeträger 12 und damit der Schaltpunkte des Niveau-Schalters der Profilstab 11 nach Öffnung des Klemmengehäuses 1 aus dem Niveau-Schalter entnommen.

Nach der Justierung der Schaltelementeträger 12 wird der Profilstab 11 wieder in den Niveau-Schalter eingeführt und in seiner Lage festgelegt.
Der Profilstab 11 besitzt im Beispiel nur eine einzige, durchgehende Führungsbahn 22, in der hintereinander, in den Abständen der Schaltpunkte, die Stromschienen 15 und die Schaltelementeträger 12 angeordnet sind.

## Patentansprüche

1. Schwimmergesteuerter Niveau-Schalter mit mindestens einem elektrischen und/oder elektronischen Schaltelement (17), welches berührungslos durch das magnetische Feld eines Schwimmermagneten (9) betätigt seinen Zustand ändert und dabei binäre oder analoge Signale erzeugt, wobei der Schaltpunkt stufenlos auf die zu regelnde Niveauhöhe der Flüssigkeit einstellbar ist, die einen Schwimmer (8) auftreibt, der an einem Gleitrohr (7) geführt ist, und wobei ein mit diesem vereinigtes längliches Halteelement (11) mindestens eine vertikale Führungsbahn (21; 22) aufweist, in der sich mindestens ein führbarer Träger (12) befindet, der mit einem Schaltelement (17) versehen ist, und parallel zu der elektrisch leitende Kontaktflächen (15.1) zum elektrischen Anschluß des Schaltelementes (17) verlaufen, dadurch **gekennzeichnet**, daß innerhalb des einen Gleitrohrs (7) mehrere Schaltelemente (17) vorhanden sind, wobei
1.1.) die Schaltelemente (17) unabhängig voneinander höhenverstellbar sind;
1.2.) das Halteelement (11) radial innen und der Schwimmer (8) radial außen koaxial zum Gleitrohr (7) angeordnet ist; und
1.3.) die den Schaltelementen (17) entsprechenden Führungsbahnen (21) samt zugehörigen elektrisch leitenden Kontaktflächen (15.1) und Schaltelementträgern (12) auf dem Umfang des Halteelementes (11) hintereinander und um bestimmte Winkel versetzt angeordnet sind **oder** das Halteelement (11) nur eine einzige durchgehende Führungsbahn (22) besitzt, in der hintereinander, in den Abständen der Schaltpunkte, die elektrisch leitenden Kontaktflächen (15.1) und die Schaltelementeträger (12) angeordnet sind.

2. Niveau-Schalter nach Anspruch 1, dadurch gekennzeichnet, daß die stufenlose Einstellung der Schaltpunkte durch die stufenlose Einstellung der Schaltelementeträger (12) in den Führungsbahnen (21) mittels Verstellelementen (19) von außen verwirklicht ist.

3. Niveau-Schalter nach Anspruch 1 oder 2, dadurch gekennzeichnet, daß in einem als Halteelement vorgesehenen, elektrisch nichtleitenden Profilstab (11) parallel zu den Führungsbahnen (21; 22) Stromschienen (15) mit den Kontaktflächen (15.1) eingebettet oder elektrisch leitende Beschichtungen auf kontaktierbaren Flächen der Führungsbahnen (21; 22) aufgebracht sind, welche mit Leitungen (14) galvanisch verbunden sind, die in Kanälen (23) des Profilstabes (11) zur Anschlußklemme (2) verlegt sind.

4. Niveau-Schalter nach Anspruch 3, dadurch gekennzeichnet, daß die elektrische Verbindung der Schaltelemente (17) zu den Stromschienen (15) oder leitenden Beschichtungen über am Schaltelementeträger (12) befestigte, federnde Kontaktelemente (16) hergestellt ist.

5. Niveau-Schalter nach Anspruch 4, dadurch gekennzeichnet, daß die Stromschienen (15) mit einer weichen Zinn/Blei-Schicht (15.1) beschichtet sind, in die die Berührungsflächen der Kontaktelemente (16) eindringen.

6. Niveau-Schalter nach einem der Ansprüche 1 bis 5, dadurch gekennzeichnet, daß bei Verwendung von Reedschaltern (17) als Schaltelementen diese mit mono- oder bistabilem Schaltverhalten ausgestattet sind.

## Claims

1. A float-controlled level switch with at least one electric and/or electronic switching element (17) which, actuated without contact by the magnetic field of a float magnet (9), changes its state and thereby generates binary or analog signals, wherein the switching point is continuously adjustable to the desired level height of the fluid on which a float (8) swims which is guided at a slide tube (7), and wherein an oblong holding element (11) united with said slide tube has at least one vertical guideway (21, 22) in which at least one guideable support (12) is contained and parallel to which electrically conductive contact surfaces (15.1) for the electric connection of the switching element (17) are running, **characterized in** that there are several switching elements (17) provided in one slide tube (7) whereby
1.1) the switching elements (17) can be adjusted in height independently from each other;
1.2) the holding element (11) is installed radially inside and the float (8) radially outside coaxial to the slide tube (7),
1.3) the guideways (21) corresponding to the switching elements (17) including the pertaining electrically conductive contact surfaces (15.1) and switching element supports (12) are provided on the circumference of the holding element (11) one behind the other and staggered by determined degrees, o r the holding element (11) has only one continuous guideway (22) in which one after the other in the same distances than the switching points the electrically conductive contact surfaces (15.1) and the switching element supports (12) are provided.

2. A float-controlled level switch according to claim 1 characterized in that continuous setting of the switching points by continuous setting of the switching element supports (12) in the guideways (21) by means of adjustment elements (19) is made possible from outside.

3. A float-controlled level switch according to claims 1 or 2 characterized in that in an electrically nonconducting profiled rod (11) intended as holding element parallel to the guideways (21, 22) conductor rails (15) with contact surfaces (15.1) are embedded or electrically conductive layers are coated on contact surfaces of the guideways (21, 22) which are electrically connected with the lines (14) which are laid in the channels (23) of the profiled rod (11) towards the connector (2).

4. A float-controlled level switch according to claim 3 characterized in that the electric connection of the switching elements (17) with the conductor rails (15) or conductive coatings is achieved by means of springy contact elements (16) fixed to the switching element support (12).

5. A float-controlled level switch according to claim 4 characterized in that the conductor rails (15) are coated with a soft tin/lead layer into which the contact surfaces of the contact elements (16) penetrate.

6. A float-controlled level switch according to claims 1 to 5 characterized in that if reed switches (17) are used as switching elements, said reed switches have a monostable or bistable switching behaviour.

## Revendications

1. Interrupteur à niveau commandé par flotteur avec au moins un élément de commutation électrique ou électronique (17) qui change son état sans contact direct actionné par le champ magnétique d'un flotteur magnétique (9) pendant qu'il produit des signaux binaires ou analogues, configuration dans laquelle le point de commutation peut être ajusté par réglage continu au niveau désiré du liquide sur lequel flotte un flotteur (8) guidé par un tuyau de glissage (7), et dans laquelle un élément de support oblong (11) réuni avec ce dernier possède au moins une glissière de guidage verticale (21; 22) dans laquelle se trouve au moins un support guidable (12) muni d'un élément de commutation (17) et parallèle à laquelle des surfaces de contact conductrices (15.1) s'étendent vers le branchement éléctrique de l'élément de commutation (17)
**caractérisé en ce que** dans l'intérieur de ce tuyau de glissage (7) il y a plusieurs éléments de commutation (17) et que
1.1) les éléments de commutation (17) peuvent être ajustés en hauteur indépendamment;
1.2) l'élément de support (11) est situé radialement à l'intérieur et le flotteur (8) radialement à l'extérieur ainsi que coaxial par rapport au tuyau de glissage (7),;
1.3) les glissières de guidage (21) correspondantes aux éléments de commutation (17), avec leurs surfaces de contact conductrices (15.1) et leurs supports des éléments de commutation (12), sont situées sur la circonférence de l'élément de support (11) l'une après l'autre et échelonnées par des degrés déterminés, **ou** que l'élément de support (11) ne possède qu'une seule glissière de guidage (22) traversante dans laquelle sont logés, l'un après l'autre dans les mêmes écarts que les points de commutation, les surfaces de contact conductrices (15.1) et les supports des éléments de commutation (12).

2. Interrupteur à niveau suivant la revendication 1, caractérisé en ce que le réglage continu des points de commutation est réalisé par le réglage continu des supports des éléments de commutation (12) dans les glissières de guidage (21) moyennant des éléments d'ajustage (19) de l'éxtérieur.

3. Interrupteur à niveau suivant l'une des revendications 1 ou 2 caractérisé en ce que dans la barre profilée (11) non-conductrice prévue comme élément de support, parallèle aux glissières de guidage (21; 22), des rails conducteurs (15) avec des surfaces de contact (15.1) sont encastrés ou des couches conductrices sont enduites sur les surfaces de contact des glissières de guidage (21; 22) qui sont connectées avec les lignes (14) posées dans les canaux (23) de la barre profilée (11) vers la borne (2).

4. Interrupteur à niveau suivant la revendication 3 caractérisé en ce que le raccordement électrique des éléments de commutation (17) avec les rails conducteurs (15) ou les couches conductrices est réalisé par des éléments de contact à ressort (16) fixés au-dessus du support des éléments de commutation (12).

5. Interrupteur à niveau suivant la revendication 4 caractérisé en ce que les rails conducteurs (15) sont enduits d'une couche souple en étain/plomb (15.1) dans laquelle les surfaces de contact des éléments de contact (16) pénètrent.

6. Interrupteur à niveau suivant l'une des revendications 1 à 5 caractérisé en ce que, si des commutateurs reed (17) sont utilisés comme éléments de commutation, ceux-ci ont un comportement de commutation monostable ou bistable.
